# DEMANDE DE BREVET EUROPEEN

(11) **EP 1 631 044 A1**
(43) Date de publication de la demande: **01.03.2006**
(21) Numéro de dépôt: 05291781.2
(22) Date de dépôt: 25.08.2005
(51) Int. Cl.: H04M 1/05

(54) **Oreillette sans fil pour téléphone mobile**

(30) Priorité: 30.08.2004 FR 0409184
(71) Demandeur: Innovi Technologies Limited, Causeway Bay, Hong Kong (CN)
(72) Inventeur: Desormière, Olivier, 92190 Meudon (FR); Drici, Mustapha, 78960 Voisins le Bretonneux (FR); Gontard, Nicolas, Hong Kong (CN); Francois, Damien, Lo Wu, Shenzhen (CN); Ponticelli, Guillaume, Happy Valley, Hong Kong (CN)
(74) Mandataire: Chameroy, Claude

(57) **Abrégé**

L'oreillette sans fil comprend deux corps 1, 2 articulés l'un à l'autre, dont l'un 1 porte un haut-parleur destiné à être engagé dans une oreille de l'utilisateur. L'autre corps 2 vient coiffer la partie extérieure de cette oreille pour maintenir l'oreillette en position d'utilisation. Un ressort métallique 7 est enroulé autour de l'axe d'articulation 5 des corps 1, 2 pour, au repos, rappeler ceux-ci l'un vers l'autre en effectuant un pincement de l'oreille de l'utilisateur qui assure la fixation de l'oreillette.

L'oreillette selon l'invention permet une mise en place rapide et une fixation sûre dans cette position.

## Description

La présente invention concerne les systèmes dits « main-libre » pour téléphone mobile et, plus particulièrement, un tel système se présentant sous la forme d'une oreillette destinée à venir se fixer de façon discrète sur l'oreille de l'utilisateur en permettant à celui-ci d'entretenir une conversation téléphonique tout en conservant le libre usage de ses deux mains, par exemple pour conduire une voiture, faire du sport (cyclisme, golf) et autre.

On connaît, proposée sous la dénomination commerciale « Ericsson », une oreillette du type mentionné ci-dessus qui est constituée de deux corps articulés l'un à l'autre, dont l'un rigide comporte à une extrémité un haut-parleur, destiné à être engagé dans une oreille de l'utilisateur et, à son extrémité opposée un micro, et l'autre présente la forme d'un fil souple (ou d'un crochet en caoutchouc) conçu pour entourer l'oreille vers l'arrière sur une grande partie du pourtour de celle-ci, de façon à venir coiffer l'oreille un peu à la façon de l'extrémité d'une branche de lunettes pour assurer le maintien en place de l'oreillette. Ce système d'oreillette présente l'avantage que l'utilisateur peut le mettre facilement en place avec une main, mais il a par contre l'inconvénient d'interdire à celui qui le porte d'effectuer des mouvements brusques ou de courir sous peine de risquer de le perdre. De plus, lorsque l'utilisateur porte des lunettes, celles-ci peuvent empêcher que le fil souple (ou le crochet de caoutchouc) servant à la fixation de l'oreillette soit bien en place autour de l'oreille.

On connaît aussi un autre type d'oreillette, désigné sous la dénomination commerciale « JABRA BT 200 », dont la fixation s'effectue derrière l'oreille et qui assure ainsi un excellent maintien. Cette oreillette est toutefois difficile à mettre en place, en particulier avec une seule main. De plus, elle s'avère inconfortable au tout d'un certain nombre d'heures d'utilisation et ne peut donc être portée pendant toute une journée. Son port n'est en outre pas du tout confortable pour les personnes ayant des lunettes.

Il existe également un autre type d'oreillette dont la fixation s'effectue par un système de pincement, mais il s'agit alors d'une oreillette avec fil et ultra légère, qui ne contient uniquement que le haut-parleur et un micro, mais pas de batterie ni aucune électronique de transmission. Dans ce cas, il s'agit en fait d'engager le haut-parleur dans l'oreille et de rabattre derrière l'oreille une partie en matière plastique pour servir de pince. Toutefois, cette pince tient par un effet de friction, ce qui devient douloureux au bout d'un certain temps.

La présente invention a pour objet de remédier aux inconvénients ci-dessus mentionnés présentés par les oreillettes sans fil connues et elle propose à cet effet une oreillette qui, tout en étant d'un faible poids, d'une esthétique agréable et d'une qualité technique irréprochable, permet une mise en place rapide et facile, et une fixation efficace aussi bien sur l'oreille gauche que sur l'oreille droite de l'utilisateur.

A cet effet, l'oreillette sans fil pour téléphone mobile selon la présente invention est du type comprenant deux corps articulés l'un à l'autre et comportant chacun des éléments d'électronique, dont l'un porte un haut-parleur destiné en position d'utilisation à être engagé dans une oreille de l'utilisateur et dont l'autre vient coiffer la partie extérieure inférieure de cette oreille pour maintenir l'oreillette en position d'utilisation. Elle se caractérise par un ressort qui est associé à l'articulation entre lesdits corps pour, au repos, rappeler ceux-ci l'un vers l'autre en effectuant un pincement de l'oreille qui assure le maintien de l'oreillette dans sa position d'utilisation avec un confort de longue durée.

Selon une forme de réalisation préférée de l'invention, ledit ressort de rappel en position de pincement des deux corps constituant l'oreillette est un ressort métallique enroulé autour de l'axe d'articulation des deux corps et dont chaque extrémité coopère avec l'un des deux corps.

Avantageusement, l'articulation entre les deux corps constituant l'oreillette comprend une pièce en matière souple qui est fixée à une extrémité à l'un desdits corps et qui reçoit, dans une ouverture ménagée à son extrémité opposée, l'axe de l'articulation porté par l'autre corps et autour duquel est enroulé le ressort de rappel.

Si les oreillettes connues disponibles sur le marché sont la plupart du temps conçues pour pouvoir être fixées sur les deux oreilles, elles nécessitent généralement toutefois une manipulation malaisée qui consiste à désolidariser une pièce, généralement en matière plastique (ce qui entraîne un risque d'usure et de rupture), à inverser sa position, puis à la resolidariser.

Selon une caractéristique supplémentaire de l'invention, le changement de côté de l'oreillette est permis par une simple rotation, sur au moins 180°, de l'une des pièces de l'oreillette portant le haut-parleur.

A cet effet, le corps portant le haut-parleur se termine par un axe longitudinal en saillie, cet axe étant engagé pour tourner dans une cavité intérieure d'un support portant le haut-parleur.

Avantageusement, ledit axe de rotation du haut-parleur comporte une partie qui présente en section une forme oblongue et qui coopère avec des éléments de paroi parallèles disposés de part et d'autre de l'axe, de sorte qu'en position d'engagement du haut-parleur dans l'oreille droite ou l'oreille gauche de l'utilisateur, les méplats de la partie oblongue de l'axe engagent les éléments de paroi ce qui assure le maintien du haut-parleur, alors que lors de la rotation du haut-parleur de l'une vers l'autre de ses positions d'utilisation, les parties circulaires de la partie oblongue de l'axe sont en contact avec les éléments de paroi en provoquant par friction un effet de résistance lors de la rotation.

Selon une caractéristique supplémentaire, l'axe de rotation porte concentriquement une portion de bague de telle sorte que, lors de la rotation du support de haut-parleur dans un sens ou dans le sens opposé pour passer d'une position d'utilisation à l'autre, l'une ou l'autre extrémité de cette portion de bague vient buter contre un ergot porté par le support du haut-parleur en limitant l'amplitude de la rotation. La longueur de ladite portion de bague peut être avantageusement calculée pour permettre une rotation du haut-parleur de quelques degrés au-delà de sa position normale d'engagement dans l'oreille droite ou l'oreille gauche de l'utilisateur en permettant un ajustement parfait de l'oreillette sur chacune des deux oreilles.

Pour bien faire comprendre l'invention on en décrira ci-après, à titre d'exemple sans caractère limitatif, une forme de réalisation préférée en référence au dessin schématique annexé dans lequel :
- la figure 1 est une vue de face d'une oreillette sans fil selon l'invention, dans une position permettant sa mise en place sur l'oreille droite d'un utilisateur ;
- la figure 2 est une vue de détail, à plus grande échelle, montrant particulièrement l'articulation des deux éléments constitutifs de l'oreillette sans fil de la figure 1 ;
- la figure 3 est une vue correspondant à la figure 2, montrant particulièrement l'intérieur du logement de l'articulation ;
- la figure 4 est une vue en perspective montrant l'intérieur de la pièce de support du haut-parleur de l'oreillette ;
- la figure 5 est une vue en perspective qui montre l'intérieur de la pièce venant fermer la pièce de support de la figure 4 ;
- la figure 6 est une vue de face partielle montrant l'axe de rotation équipant l'un des éléments de l'oreillette selon l'invention et destiné à coopérer avec la pièce de support de la figure 4 ;
- la figure 7 est une vue en bout de l'axe de la figure 6 ;
- la figure 8 est une vue en perspective montrant la coopération de la pièce de support du haut-parleur et de son axe de rotation, dans la position de l'oreillette permettant sa mise en place sur l'oreille gauche d'un utilisateur ; et
- la figure 9 est une vue en perspective correspondant à la figure 8, après rotation de 90° de la pièce de support du haut-parleur dans le sens anti-horaire.

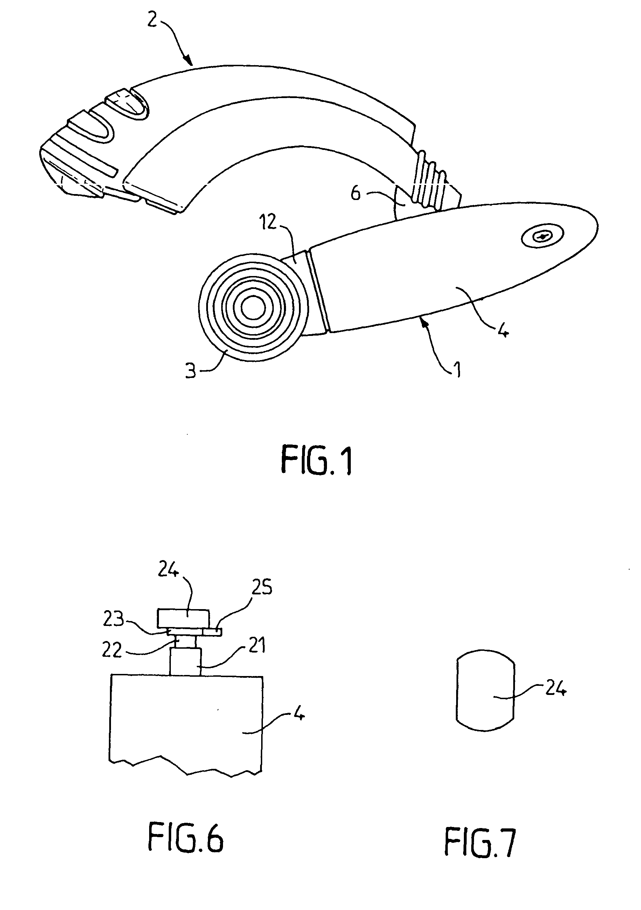

En référence à la figure 1, on a représenté une oreillette sans fil selon l'invention utilisable en liaison avec un téléphone mobile. Cette oreillette est constituée de deux éléments 1, 2 réunis par une articulation.

L'élément 1, réalisé en matière plastique, comprend à une extrémité un haut-parleur 3 de forme circulaire, destiné à être introduit dans l'une des oreilles de l'utilisateur. Comme on l'expliquera plus loin, le haut-parleur 3 peut pivoter sur plus de 180° pour permettre de fixer l'oreillette aussi bien sur l'oreille droite que sur l'oreille gauche d'un utilisateur.

Le corps de l'élément 1 se poursuit par un logement 4, et se termine à son extrémité opposée par un micro. Il comporte également une batterie d'alimentation.

L'élément 2, également en matière plastique, présente une forme arquée lui permettant de venir épouser l'arrière de l'oreille de l'utilisateur. Cet élément 2 contient des circuits électroniques (non visibles sur le dessin).

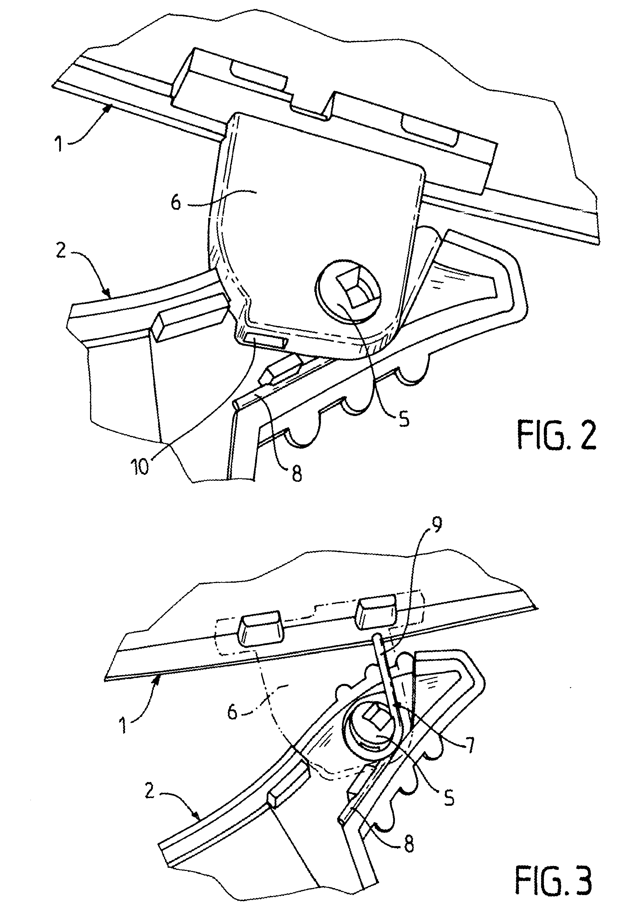

A une extrémité, l'élément 2 est relié par une articulation à l'élément 1, en un emplacement de ce dernier proche de l'extrémité opposée au haut-parleur 3. A cet effet, comme on le voit sur la figure 2, l'élément 2 comporte intérieurement un axe transversal 5 qui est engagé dans une ouverture circulaire d'une pièce de liaison 6 en une matière souple telle que du caoutchouc, formant logement de l'articulation, ménagée à une extrémité dont l'autre extrémité est fixée dans le corps de l'élément 1.

Comme on le voit mieux à la figure 3, où l'intérieur de la pièce de liaison 6 est visible, un ressort métallique 7 est enroulé autour de l'axe 5 en ayant l'une de ses branches 8 en butée dans le corps de l'élément 2 et son autre branche 9 en butée dans le corps de l'élément 1. Ainsi, au repos, le ressort 7 agit pour serrer l'élément 2 contre l'élément 1 en pinçant l'oreille de l'utilisateur et en maintenant ainsi fermement en place l'oreillette, alors que les éléments 1 et 2 peuvent être écartés l'un de l'autre, contre l'action du ressort 7, pour mettre en place l'oreillette sur l'oreille de l'utilisateur, ou l'en retirer.

On remarquera que dans la pièce de liaison 6 est ménagée une ouverture 10 (figure 2) permettant le passage de fils ou d'un circuit imprimé souple de l'un vers l'autre des éléments 1 et 2.

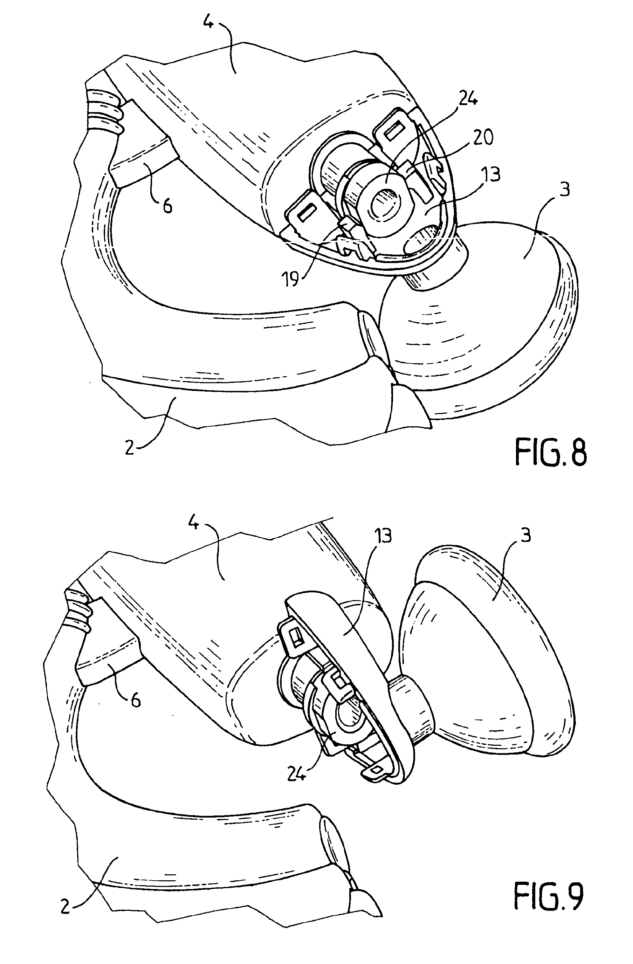

La partie formant haut-parleur 3 est conçue pour tourner autour d'un axe 21 qui fait saillie longitudinalement à une extrémité du logement 4 (figure 6). A cet effet, l'extrémité de l'axe 21 est destinée à s'engager dans un logement intérieur d'une pièce 12 servant de support pour le haut-parleur 3. La pièce de support 12 est partagée, selon un plan longitudinal médian, en deux parties 13, 13' dont l'une porte le haut-parleur 3.

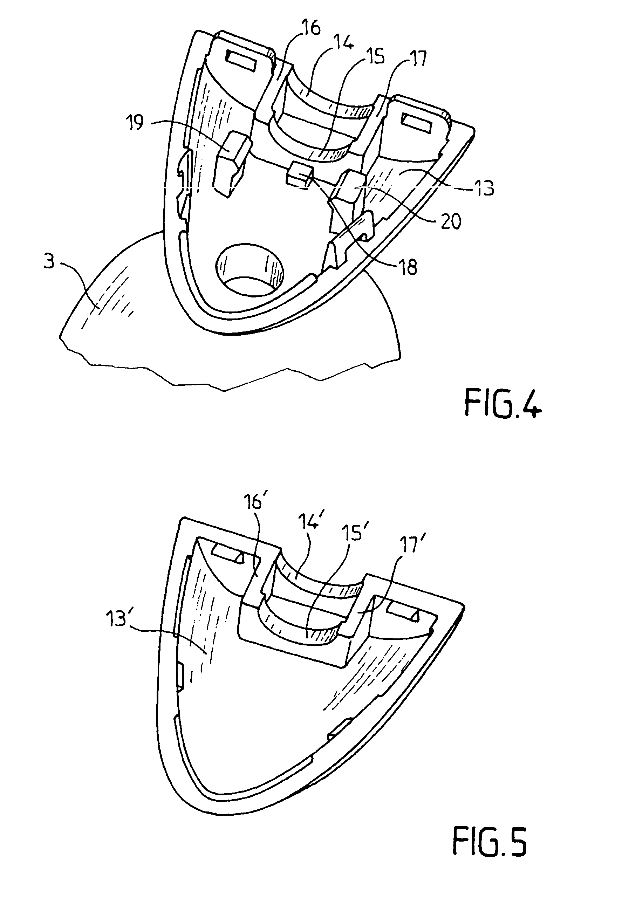

Comme on le voit à la figure 4 la partie 13 de la pièce 12, qui porte le haut-parleur 3, comporte centralement à sa partie inférieure deux parois de maintien transversales arquées 14, 15 parallèles, la paroi 14 la plus extrême ayant un rayon de courbure plus grand que celui de la paroi 15. Deux parois longitudinales parallèles 16, 17 relient ensemble les extrémités correspondantes des parois 14, 15. En avant de la paroi 15, au milieu de celle-ci, se trouve un ergot 18, formant butée, dont le rôle sera expliqué plus loin.

En avant de l'ergot 18 sont disposées deux parois longitudinales parallèles 19, 20 dont l'écartement est légèrement supérieur à celui des parois 16, 17.

Comme représenté à la figure 6, le logement 4 de l'élément 1 se termine, à son extrémité opposée à l'articulation avec l'élément 2, par un axe 21 dont la partie inférieure cylindrique se poursuit par une partie cylindrique 22 de plus petit diamètre, puis par une partie cylindrique 23 de même diamètre que la partie 21 et par une partie finale 24 légèrement oblongue (voir figure 7). Sur moins d'un tiers de sa périphérie, la partie cylindrique 23 est solidaire d'une partie de bague 25, dont la fonction sera expliquée plus loin.

Ainsi qu'on l'a représenté aux figures 8 et 9, le montage pivotant de la pièce de support 13 du haut-parleur 3 s'effectue en engageant l'axe de rotation 21 dans les logements du support 13, de façon :
- que la partie cylindrique inférieure de l'axe 21 vienne en appui contre la paroi arquée 14, en étant engagée entre les parois 16 et 17,
- que la partie cylindrique 22 de l'axe vienne en appui contre la paroi arquée 15,
- que la partie cylindrique 23 vienne en appui sur l'ergot 18, de sorte que lors d'une rotation de cette partie 23 autour de son axe longitudinal, la partie de bague 25 vienne buter contre l'ergot 18 par l'une ou l'autre de ses extrémités en limitant l'angle de cette rotation, et
- que la paroi extrême oblongue 24 de l'axe vienne s'engager entre les parois 19, 20.

Une fois l'axe 21 en position dans le logement de la pièce 13, on ferme celle-ci par application et clipage de la pièce 13' formant couvercle, celle-ci présentant intérieurement (figure 5) des parois arquées 14', 15' et des parois rectilignes 16', 17' qui viennent coopérer avec les parois correspondantes 14, 15, 16, 17 de la pièce de support 13 pour enfermer l'axe 21 tout en le laissant libre de tourner.

Le fonctionnement du dispositif se comprend immédiatement de la description qui précède.

Dans la position de la pièce de support 13 du haut-parleur 3 représentée à la figure 8, le dispositif est en position pour être fixé à l'oreille gauche d'un utilisateur, les deux méplats de la partie oblongue 24 de l'axe 21 servant pour le maintien par les parois 19, 20, et l'extrémité de gauche de la partie de bague 25 étant proche de l'ergot 18.

Lorsqu'on commence à faire tourner la pièce de support 13 autour de l'axe 21 dans le sens anti-horaire en regardant la figure 8, les deux parois 19, 20 entrent alors en contact avec les parties rondes de la partie oblongue 24 (voir figure 9), ce qui procure alors un effet de résistance par friction lors de la manipulation.

En continuant la rotation et après que le support ait tourné de 180° à partie de la position de la figure 8, un déclic se fait sentir qui est dû au fait que les parois 19, 20 viennent en contact avec les parties rondes de la partie oblongue 24 de l'axe 21 en assurant l'immobilisation de la pièce de support 13 dans la position du haut-parleur 3 permettant la fixation du dispositif sur l'oreille droite de l'utilisateur. Dans cette position (non représentée) la pièce de support 13 peut encore tourner de quelques degrés jusqu'à venir en butée par la partie de bague 25 contre l'ergot 18 ce qui permet d'ajuster parfaitement le dispositif sur l'oreille, le corps de l'élément 1 se trouvant ainsi collé contre la joue de l'utilisateur. Sans cette possibilité d'ajustement, l'alignement du haut-parleur 3 sur l'oreille ferait que le corps de l'élément 1 serait un peu trop décollé de la joue.

De la même façon lorsque la pièce de support 13 est dans sa position de coopération avec l'oreille gauche de l'utilisateur (figure 8), on peut faire tourner celle-ci de quelques degrés dans le sens horaire, pour permettre un ajustement parfait sur cette oreille, jusqu'à ce que la partie de bague 25 vienne en butée contre l'ergot 18.

On comprendra que la description ci-dessus a été donnée à simple titre d'exemple, sans caractère limitatif, et que des adjonctions ou des modifications constructives pourraient y être apportées sans sortir du cadre de l'invention déterminé par les revendications annexées.

## Revendications

1. Oreillette sans fil pour téléphone mobile, comprenant deux corps (1, 2) articulés l'un à l'autre dont l'un (1) porte un haut-parleur (3) destiné en position d'utilisation à être engagé dans une oreille de l'utilisateur et dont l'autre (2) vient coiffer la partie extérieure de cette oreille pour maintenir l'oreillette en position d'utilisation, **caractérisée en ce qu'**un ressort (7) est associé à l'articulation entre lesdits corps (1, 2) pour, au repos, rappeler ceux-ci l'un vers l'autre en effectuant un pincement de l'oreille de l'utilisateur qui assure la fixation de l'oreillette dans sa position d'utilisation.

2. Oreillette sans fil pour téléphone mobile selon la revendication 1, **caractérisée en ce que** ledit ressort de rappel (7) est un ressort métallique enroulé autour de l'axe d'articulation (5) des deux corps (1, 2), et dont chaque extrémité (8, 9) coopère avec l'un des deux corps (1, 2).

3. Oreillette sans fil pour téléphone mobile selon la revendication 2, **caractérisée en ce que** l'articulation entre les deux corps (1, 2) comprend une pièce en matière souple (6) telle que du caoutchouc fixée à une extrémité à l'un desdits corps (1) et recevant dans une ouverture ménagée à son extrémité opposée l'axe d'articulation (5) porté par l'autre corps (2), ledit ressort de rappel (7) étant enroulé autour de cet axe d'articulation (5).

4. Oreillette sans fil pour téléphone mobile selon la revendication 3, **caractérisée en ce que** ladite pièce d'articulation (6) présente une partie creuse (10) permettant le passage de fils électriques ou d'un circuit imprimé souple de l'un à l'autre desdits corps.

5. Oreillette sans fil pour téléphone mobile selon l'une quelconque des revendications 1 à 4, **caractérisée en ce que** le haut-parleur (3) porté par l'un desdits corps (1) peut pivoter autour d'un axe longitudinal (21) sur au moins 180°, pour permettre de pouvoir fixer l'oreillette aussi bien à l'oreille gauche qu'à l'oreille droite de l'utilisateur.

6. Oreillette sans fil pour téléphone mobile selon la revendication 5, **caractérisée en ce que** ledit corps (1) portant le haut-parleur (3) se termine par un axe longitudinal en saillie (21), le dit axe (21) étant engagé pour tourner dans une cavité intérieure (14, 15, 16, 17, 14', 15', 16', 17') d'une pièce de support (13, 13') portant le haut-parleur (3).

7. Oreillette sans fil pour téléphone mobile selon la revendication 6, **caractérisée en ce que** ledit axe de rotation (21) du haut-parleur (3) comporte une partie (24) qui présente en section une forme oblongue et qui coopère avec des éléments de paroi parallèles (19, 20) disposés de part et d'autre de l'axe (21), de sorte qu'en position d'engagement du haut-parleur (3) dans l'oreille droite ou l'oreille gauche de l'utilisateur les méplats de la partie oblongue (24) de l'axe (21) engagent les éléments de paroi (19, 20) ce qui assure le maintien du haut-parleur (3), alors que lors de la rotation du haut-parleur (3) de l'une vers l'autre de ses positions d'utilisation, les parties circulaires de la partie oblongue (24) de l'axe (21) sont en contact avec les éléments de paroi (19, 20) en provoquant par friction un effet de résistance lors de la rotation.

8. Oreillette sans fil pour téléphone mobile selon la revendication 6 ou la revendication 7, **caractérisée par** une portion de bague (25) portée concentriquement par l'axe de rotation (21), l'une ou l'autre extrémité de cette portion de bague (25) venant, lors de la rotation de la pièce de support (13, 13') du haut-parleur (3) dans un sens ou dans le sens opposé pour passer d'une position d'utilisation à l'autre, buter contre un ergot (18) porté par la pièce de support (13, 13') du haut-parleur (3) en limitant l'amplitude de la rotation.
